# EUROPÄISCHE PATENTSCHRIFT

(11) **EP 3 613 819 B1**
(45) Veröffentlichungstag und Bekanntmachung des Hinweises auf die Patenterteilung: **20.03.2024**
(21) Anmeldenummer: 19189373.4
(22) Anmeldetag: 31.07.2019
(51) Int. Cl.: C09J 7/30

(54) **KLEBEBAND ZUM UMMANTELN VON LANGGESTRECKTEM GUT WIE INSBESONDERE KABELSÄTZEN UND VERFAHREN ZUR UMMANTELUNG**
ADHESIVE TAPE FOR SHEATHING ELONGATED GOODS, IN PARTICULAR CABLE SETS AND SHEATHING METHOD
BANDE ADHÉSIVE DESTINÉE À L'ENVELOPPEMENT D'UNE MARCHANDISE ALLONGÉE COMME NOTAMMENT LES FAISCEAUX DE CÂBLES ET PROCÉDÉ D'ENVELOPPEMENT

(30) Priorität: 20.08.2018 DE 102018213969
(43) Veröffentlichungstag der Anmeldung: 26.02.2020
(73) Patentinhaber: tesa SE, 22848 Norderstedt (DE)
(72) Erfinder: KUTTER, Alexander, 22455 Hamburg (DE); GULDBRANDSEN, Lars, 22885 Barsbüttel (DE); MACKETANZ, Lars, 22529 Hamburg (DE); KEREP, Patrick, 22767 Hamburg (DE)
(74) Vertreter: tesa SE

(56) Entgegenhaltungen:
- EP-A1- 2 522 705
- EP-A1- 2 627 539
- EP-A2- 2 463 347
- WO-A1-2017/055334
- DE-U1-202017 107 748

## Beschreibung

Die Erfindung bezieht sich auf die Verwendung eines Klebebands zum Ummanteln von langgestrecktem Gut wie insbesondere Kabelsätzen in Automobilen.

Eindeckungen zum Ummanteln von langgestrecktem Gut werden beispielsweise eingesetzt, um insbesondere Kabel, Leitungen sowie gegebenenfalls Stecker in Automobilen zu umhüllen und vor beispielsweise Scheuerbeanspruchungen zu schützen. Tatsächlich können durch solche Eindeckungen und dadurch hergestellte Ummantelungen beziehungsweise Längsummantelungen nicht nur elektrische Kabel, sondern auch allgemein Schläuche und Rohre bandagiert werden.

Mit der DE 197 32 958 A1 ist ein Klebeband zum Ummanteln von langgestrecktem Gut wie Kabelsätzen oder Kunststoffprofilen offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, dass sich bei Vorhandensein eines leichten Anpressdruckes auf zwei aufeinander liegenden Klebeschichten unter Auflösung der Grenzflächen und vollständiger Koaleszenz der Klebeschichten eine homogene Haftklebstoffmasse bildet.

Des Weiteren umfasst die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, dass mindestens zwei Klebebereiche des bandförmigen Trägers auf der mit der Klebeschicht versehenen Seite derart gegeneinander geklebt werden, dass unter Auflösung von Grenzflächen der Klebeschicht eine homogene Masse entsteht.

Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, dass beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

Die DE 100 36 805 A1 offenbart eine Ummantelung zum Ummanteln von langgestrecktem Gut mit einer bevorzugt textilen Eindeckung, bei der auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, dass sich das Klebeband über eine der Längskanten der Eindeckung erstreckt.

In einer ersten vorteilhaften Ausführungsform der Erfindung weist die Ummantelung auf einem im Vergleich zur Breite der Eindeckung schmalen Kantenbereich der Eindeckung ein zweites selbstklebend ausgerüstetes Klebeband auf, das so auf der Eindeckung verklebt ist, dass sich das Klebeband über die andere der beiden Längskanten der Eindeckung erstreckt.

Optimierte Ausführungsformen derselben werden in der EP 1 312 097 A1 offenbart. In der EP 1 300 452 A2, der DE 102 29 527 A1 sowie der WO 2006 108 871 A1 werden ebenfalls Weiterentwicklungen dargestellt.

Soll ein Kabelbaum mit einem Produkt, wie es beispielsweise aus der DE 100 36 805 A1 bekannt ist, ummantelt werden, wird eine der Längskanten des Produkts auf dem Kabelbaum in axialer Richtung fixiert, beispielsweise mit einem Klebestreifen oder einem Klebeband, das Teil des Produkts ist. Anschließend wird das Produkt in einer kreisförmigen Bewegung um den Kabelbaum geführt, so dass der Kabelbaum vom Produkt eingeschlagen wird. Schließlich wird die andere Längskante des Produkts auf dem Kabelbaum fixiert, beispielsweise wieder mittels eines Klebebands. Wenn der Kabelbaum vollständig eingeschlagen ist, erfolgt die Fixierung der zweiten Längskante auf dem Produkt selbst.

Wenn ein verbesserter Schutz des Kabelbaums oder eine bessere Dämpfung desselben gewünscht wird, kann der Kabelbaum auch zweifach eingeschlagen werden, indem das Produkt zweimal kreisförmig um den Kabelbaum geführt wird. Auf diese Weise ergeben sich zwei Lagen des Produkts, die den Kabelbaum ummanteln.

Aus der DE 20 2017 107 748 U1 ist eine Eindeckung zum Ummanteln von langgestrecktem Gut, insbesondere zur Herstellung einer Längsumhüllung für Kabel in Automobilen, mit einem Träger und mit wenigstens zwei auf einer Oberseite und/oder Unterseite des Trägers angeordneten Verschlussstreifen aus einer Klebemasse bekannt. Die Verschlussstreifen verlaufen entlang jeweiliger Längskanten des Trägers verlaufen und definieren zwischen und/oder neben sich einen unbeschichteten Freibereich definieren.

Die EP 2 627 539 A1 beschreibt ein Klebeband, insbesondere Wickelband zur Bündelung von Kabeln in Automobilen, mit einem bandförmigen Träger und mit zumindest einem wenigstens einseitig auf den Träger aufgebrachten Klebstoffstreifen, wobei der Klebstoffstreifen zwischen ungefähr 20 % und 50 % der Fläche der zugehörigen Trägerseite bedeckt.

Die EP 2 522 705 A1 offenbart die Verwendung eines Klebebandes zum Ummanteln von langgestrecktem Gut, wobei das Klebeband besteht aus einem vorzugsweise textilen Träger und aus einer auf mindestens einer Seite des Trägers aufgebrachten Haftklebemasse in Form einer getrockneten Polymerdispersion, die n-Butylacrylat und/oder 2-Ethylhexylacrylat sowie gegebenenfalls ein ethylenisch ungesättigtes Monomer mit einer Säure- oder Säureanhydridfunktion sowie ein oder mehrere von den genannten Monomeren verschiedene ethylenisch ungesättigte monofunktionelle Monomere enthält. Die Haftklebemasse enthält zwischen 15 und 100 Gewichtsteile eines Klebrigmachers (bezogen auf die Masse der getrockneten Polymerdispersion).

Aus der EP 2 497 805 A1 ist ein Klebeband bekannt, bestehend aus einem Träger mit einer Oberseite und einer Unterseite, wobei der Träger bezogen auf die Querrichtung eine Breite B_{T} aufweist, wobei an zumindest einer Längskante des Trägers ein Klebstoffstreifen aus einem reaktiven hitzeaktivierbaren Kleber vorgesehen ist, der eine Breite B_{K} von mindestens 3 mm und von höchstens 50 % der Breite B_{T} aufweist. Ein Polymerstreifen wird nicht offenbart.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification"). Im Folgenden werden diese Normen verkürzt mit LV 312 beziehungsweise mit Ford-Spezifikation bezeichnet.

Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312 beschrieben sind.

Aufgabe der Erfindung ist es, ein Klebeband zur Verfügung zu stellen, das das besonders einfache, preiswerte und schnelle Ummanteln von langgestrecktem Gut wie Kabelsätzen in Automobilen ermöglicht und das insbesondere eine hohe Abriebfestigkeit mit zugleich geringen Herstellungskosten erreicht.

Gelöst wird diese Aufgabe durch Verwendung eines Klebebandes zum Ummanteln von langgestrecktem Gut wie Kabeln in einem Automobil, wie diese im Hauptanspruch niedergelegt ist. Gegenstand der Unteransprüche sind dabei vorteilhafte Weiterbildungen des Erfindungsgegenstandes und ein Gut, das mit dem Klebeband ummantelt ist.

Demgemäß betrifft die Erfindung die Verwendung eines Klebebands zum Ummanteln von langgestrecktem Gut wie Kabelsätzen in einem Automobil, wobei das langgestreckte Gut in axialer Richtung von dem Klebeband umhüllt wird, wobei das Klebeband einen Träger mit einer Oberseite und einer Unterseite aufweist, wobei der Träger bezogen auf die Querrichtung eine Breite B_{T} aufweist, wobei an zumindest einer Längskante auf der Unterseite des Trägers ein Klebstoffstreifen vorgesehen ist, der eine Breite B_{K} von mindestens 3 mm und von höchstens 30 % der Breite B_{T} aufweist.

Neben dem Klebstoffstreifen ist auf der Unterseite des Trägers zumindest ein nichtklebender Polymerstreifen vorhanden, der sich über eine Breite B_{P} von mindestens 60 %, vorzugsweise 75 %, besonders vorzugsweise 90 %, ganz besonders vorzugsweise 100 % der nicht mit dem Klebstoffstreifen beschichteten Restbreite B_{RB} des Trägers erstreckt.

Was bei dem Träger die Oberseite oder die Unterseite ist, ist grundsätzlich beliebig wählbar.

Gemäß einer ersten bevorzugten Ausführungsform ist an beiden Längskanten auf der Unterseite des Trägers jeweils ein Klebstoffstreifen vorgesehen, die eine Breite B_{K} von mindestens 3 mm und von höchstens 30 % der Breite B_{T} aufweisen, wobei zwischen den Klebstoffstreifens auf der Unterseite des Trägers zumindest ein Polymerstreifen vorhanden ist, der sich über eine Breite B_{P} von mindestens 60 %, vorzugsweise 75 %, besonders vorzugsweise 90 %, ganz besonders vorzugsweise 100 % der nicht mit den Klebstoffstreifen beschichteten Restbreite B_{RB} des Trägers erstreckt.

Gemäß einer weiteren bevorzugten Ausführungsform weisen der oder die Klebstoffstreifen eine Breite B_{K} von mindestens 3 mm und von höchstens 10 %, vorzugsweise von höchstens 20 %, besonders vorzugsweise von höchstens 25 % der Breite B_{T} auf.

Vorzugsweise schließen der oder die Klebestoffstreifen jeweils bündig mit der oder den Längskanten des Trägers ab.

Besonders bevorzugt ist die Variante, bei die Summe aus der Breite B_{K} des oder der Klebstoffstreifen und aus der Breite B_{P} des Polymerstreifens der Breite B_{T} des Trägers entspricht.

Der oder die Klebstoffstreifen können auch mit einem Versatz mit einer Breite B_{VS} von bis zu 5 mm in Querrichtung auf dem Träger aufgebracht werden. Der Versatz ist vorteilhafterweise schmaler als der Klebstoffstreifen selbst.

Gemäß einer besonders vorteilhaften Ausführungsform des Klebebands beträgt die Breite B_{K} der Klebstoffstreifen mindestens 10 mm, vorzugsweise mindestens 15 mm und/oder maximal höchstens 25 % der Breite B_{T}, vorzugsweise höchstens 10 % der Breite B_{T}. Weiter vorzugsweise beträgt die Breite B_{K} der Klebstoffstreifen zwischen 5 und 40 mm, weiter vorzugsweise zwischen 10 und 30 mm.

Weiter vorzugsweise ist die Breite des einen Klebstoffstreifens B_{K1} um den Faktor 0,5 bis 0,8, vorzugsweise 0,6 bis 0,75 kleiner als die Breite des anderen Klebstoffstreifens B_{K2}.

Der oder die Klebstoffstreifen weisen gemäß einer weiteren vorteilhaften Ausführungsform der Erfindung eine Dicke von 40 bis 300 µm, vorzugsweise 60 bis 200 µm, weiter vorzugsweise 60 bis 140 µm auf.

Der oder die Klebstoffstreifen weisen gemäß einer weiteren vorteilhaften Ausführungsform der Erfindung ein Auftragsgewicht von 40 bis 300 g/m², vorzugsweise 60 bis 200 g/m², weiter vorzugsweise 60 bis 140 g/m² auf.

Weiter vorzugsweise ist die Dicke oder das Auftragsgewicht des einen, insbesondere des schmaleren Klebstoffstreifens um den Faktor 0,5 bis 0,8, vorzugsweise 0,6 bis 0,75 kleiner als die Dicke oder das Auftragsgewicht des anderen Klebstoffstreifens.

Gemäß einer besonders bevorzugten Variante der Erfindung erstreckt sich der Polymerstreifen über 100 % der nicht mit den Klebstoffstreifen beschichteten Restbreite B_{RB} des Trägers.

In diesem Fall liegen die Kanten des Polymerstreifens bündig (also ohne Zwischenraum) an einer beziehungsweise an jeweils einer Kante des oder der Klebstoffstreifen.

Der Polymerstreifen weist gemäß einer weiteren vorteilhaften Ausführungsform der Erfindung wie die Klebstoffstreifen eine Dicke von 40 bis 300 µm, vorzugsweise 60 bis 200 µm, weiter vorzugsweise 60 bis 140 µm auf.

Der Polymerstreifen weist gemäß einer weiteren vorteilhaften Ausführungsform der Erfindung wie die Klebstoffstreifen ein (flächenbezogenes) Auftragsgewicht von 10 bis 300 g/m², vorzugsweise 40 bis 200 g/m², weiter vorzugsweise 60 bis 140 g/m² auf.

Weiter ist bevorzugt, wenn die Dicke beziehungsweise das (flächenbezogene) Auftragsgewicht des Polymerstreifens die Dicke beziehungsweise das (flächenbezogene) Auftragsgewicht des oder der Klebstoffstreifen um maximal 20 % überschreitet, besonders bevorzugt ist, wenn die Dicke beziehungsweise das (flächenbezogene) Auftragsgewicht des Polymerstreifens und die Dicke beziehungsweise das (flächenbezogene) Auftragsgewicht des oder der Klebstoffstreifen identisch sind.

Weiter vorzugsweise sind die Dicken der beiden Klebstoffstreifen sowie des Polymerstreifens identisch.

Der Polymerstreifen ist nichtklebend, weist also eine Klebkraft auf Stahl von weniger als 0,7 N/cm nach 30 min Aufziehen auf.

Der Glasübergangspunkt T_{g} liegt gemäß einer bevorzugten Ausführungsform unterhalb 0 °C.

Das Molekulargewicht M_{w} des Polymerstreifens ist gemäß einer bevorzugten Ausführungsform größer 10.000 g/mol.

Weiter vorzugsweise sind alle drei Parameter gleichzeitig erfüllt.

Weiter vorzugsweise ist der Polymerstreifen ein nichtklebriges, polymeres Material aus Polyacrylat, Polyolefin, Polyester, Naturkautschuk, Synthesekautschuk oder Polyurethan. Die bekannten Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate, Kreide und insbesondere Flammschutzmittel können in dem Polymerstreifen Verwendung finden.

Die Herstellung und Verarbeitung des Polymerstreifens kann aus Lösung, Dispersion sowie aus der Schmelze erfolgen. Bevorzugte Herstell- und Verarbeitungsverfahren vermeiden ein Laminieren des Polymerstreifens auf den Träger.

Die Breite B_{T} des Trägers liegt vorzugsweise zwischen 20 und 500 mm, weiter vorzugsweise zwischen 40 bis 200 mm, weiter vorzugsweise zwischen 60 bis 130 mm. Sodann ist es vorteilhaft, wenn der Träger ein Flächengewicht von 30 bis 250 g/m², vorzugsweise 50 bis 200 g/m², weiter vorzugsweise 60 bis 150 g/m² aufweist.

Im Folgenden werden für einige Ausführungsformen der Erfindung bevorzugte Parameterkombinationen angegeben, ohne die Erfindung damit einschränken zu wollen.

Bei einem Träger auf Gewebebasis weisen der Träger und die zwei Klebstoffstreifen vorzugsweise die folgenden Werte auf:
- Flächengewicht des Trägers: 50 bis 200 g/m², bevorzugt 50 bis 150 g/m²
- Dicke der Klebstoffstreifen: 40 bis 200 µm, bevorzugt 60 bis 140 µm
- Breite B_{K} der Klebstoffstreifen: 5 bis 40 mm, bevorzugt 10 bis 30 mm
- Breite B_{P} von 100 % der nicht mit den Klebstoffstreifen beschichteten Restbreite B_{RB} des Trägers
- Dicke des Polymerstreifens identisch zu Dicke des Klebstoffstreifens

Bei einem Träger auf Vliesbasis weisen der Träger und die zwei Klebstoffstreifen vorzugsweise die folgenden Werte auf:
- Flächengewicht des Trägers: 30 bis 250 g/m², bevorzugt 45 bis 200 g/m², weiter bevorzugt 60 bis 200 g/m²
- Dicke der Klebstoffstreifen: 60 bis 300 µm, bevorzugt 120 bis 280 µm
- Breite B_{K} der Klebstoffstreifen: 5 bis 40 mm, bevorzugt 10 bis 30 mm
- Breite B_{P} von 100 % der nicht mit den Klebstoffstreifen beschichteten Restbreite B_{RB} des Trägers
- Dicke des Polymerstreifens identisch zu Dicke des Klebstoffstreifens

Bei einem Träger auf Gewirkebasis weisen der Träger und die zwei Klebstoffstreifen vorzugsweise die folgenden Werte auf:
- Flächengewicht des Trägers: 50 bis 250 g/m², bevorzugt 50 bis 200 g/m²
- Dicke der Klebstoffstreifen: 40 bis 200 µm, bevorzugt 60 bis 140 µm
- Breite B_{K} der Klebstoffstreifen: 5 bis 40 mm, bevorzugt 10 bis 30 mm
- Breite B_{P} von 100 % der nicht mit den Klebstoffstreifen beschichteten Restbreite B_{RB} des Trägers
- Dicke des Polymerstreifens identisch zu Dicke des Klebstoffstreifens

Bei den genannten Werten resultieren die als bevorzugt beanspruchten Durchmesser des sich aus dem Klebeband ergebenden Schlauches von 5 bis 50 mm, weiter bevorzugt 10 bis 30 mm.

Gemäß einer weiteren bevorzugten Variante der Erfindung ist zu dem mindestens einen Klebstoffstreifen auf der Unterseite des Trägers auf der Oberseite des Trägers ein weiterer (dritter) Klebstoffstreifen vorgesehen. Dieser dritte Klebestreifen fungiert im Allgemeinen als Fixierstreifen. Außerdem ist der dritte Klebestreifen im Querschnitt des Trägers gesehen im Bereich des Polymerstreifens zwischen und/oder neben dem einen beziehungsweise den beiden Klebstoffstreifen auf der Unterseite des Trägers.

Das Klebeband wird zum Ummanteln von langgestrecktem Gut wie insbesondere Kabelsätzen eingesetzt, wobei das langgestreckte Gut in axialer Richtung von dem Klebeband umhüllt wird.

Soll ein Kabelbaum mit dem Klebeband ummantelt werden, wird dazu eine der Längskanten des Klebebands auf dem Kabelbaum in axialer Richtung fixiert, beispielsweise mit dem ersten Klebestoffstreifen. Anschließend wird das Produkt in einer kreisförmigen Bewegung um den Kabelbaum geführt, so dass der Kabelbaum vom Klebeband eingeschlagen wird. Schließlich wird die andere Längskante des Klebebands auf dem Kabelbaum fixiert, beispielsweise mittels des zweiten Klebstoffstreifens. Wenn der Kabelbaum vollständig eingeschlagen ist, erfolgt die Fixierung der zweiten Längskante auf dem Klebeband selbst.

Wenn ein verbesserter Schutz des Kabelbaums oder eine bessere Dämpfung desselben gewünscht wird, kann der Kabelbaum auch zweifach eingeschlagen werden, indem das Klebeband zweimal kreisförmig um den Kabelbaum geführt wird. Auf diese Weise ergeben sich zwei Lagen des Produkts, die den Kabelbaum ummanteln.

Schließlich ist vom Erfindungsgedanken auch ein langgestrecktes Gut wie insbesondere ein Kabelsatz umfasst, ummantelt mit dem Klebeband sowie ein Fahrzeug, enthaltend einen erfindungsgemäß ummantelten Kabelbaum.

Gemäß einer bevorzugten Ausführungsform der Erfindung ist der Träger einlagig ausgeführt. Weiter vorzugsweise ist die Oberseite des Trägers unbeschichtet.

Als Träger eignen sich prinzipiell alle Trägermaterialien, bevorzugt sind textile Träger und besonders bevorzugt Gewebe, insbesondere Polyestergewebe.

Grundsätzlich können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurch genadelt sind und die Deckschicht und die Unterlagsschicht untereinander verbinden.

Die durch die Partikelschicht hindurch genadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, eine Eindeckung und ein Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch die Eindeckung einen sehr geringen Foggingwert.

Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.

Wenn die Umfangsgeschwindigkeit der Walzen differiert, dann wird der Träger zusätzlich glattgeschliffen.

Der Träger ist vorzugsweise ein Gewebe.

Besonders bevorzugte Gewebe sind wie folgt aufgebaut:
- die Fadenzahl in der Kette 10 bis 60/cm beträgt
- die Fadenzahl im Schuss 10 bis 40/cm beträgt
- die Kettfäden ein Garngewicht zwischen 40 und 400 dtex, insbesondere zwischen 44 und 330 dtex, besonders bevorzugt von 167 dtex besitzen
- die Schussfäden ein Garngewicht zwischen 40 und 660 dtex, insbesondere zwischen 44 und 400 dtex, besonders bevorzugt von 167 dtex besitzen

Gemäß einer weiteren vorteilhaften Ausführungsform der Erfindung beträgt die Fadenzahl in der Kette 40 bis 50/cm, vorzugsweise 44/cm.

Gemäß einer weiteren vorteilhaften Ausführungsform der Erfindung beträgt die Fadenzahl im Schuss 18 bis 22/cm, vorzugsweise 20/cm.

Gemäß einer weiteren vorteilhaften Ausführungsform der Erfindung handelt es sich bei dem Gewebe um ein Polyestergewebe. Weitere Möglichkeiten sind Polyamidgewebe, Viskosegewebe und/oder ein Mischgewebe aus den genannten Materialien.

Weiter bevorzugt beträgt die Dicke des Gewebes maximal 300 µm, besonders bevorzugt 170 bis 230 µm, ganz besonders bevorzugt 190 bis 210 µm.

Der Träger weist gemäß einer weiteren vorteilhaften Ausführungsform der Erfindung ein Flächengewicht von bis zu 200 g/m² auf, bevorzugt 100 bis 150 g/m².

Bevorzugt werden Träger, die zu einen (relativ problemlos) von Hand einreißbaren Klebeband führen, was für den beschriebenen Einsatzzweck und die besonders bevorzugte Verarbeitung als Wickelband zur Bündelung von Kabeln in Automobilen ebenfalls von besonderer Bedeutung ist.

Eine Reißfestigkeit in Querrichtung von weniger als 10 N, welche nach der AFERA-Norm 4007 bestimmt wird, dient als Kriterium für die Handeinreißbarkeit des Klebebandes.

Lediglich bei sehr hohen Flächengewichten oder Dicken der eingesetzten Träger kann die Handeinreißbarkeit nicht oder nur eingeschränkt gegeben sein. In diesem Fall können aber Perforationen vorhanden sein, um die Handeinreißbarkeit zu optimieren. Perforationen können auch bei per se handeinreißbaren Klebebändern vorgesehen sein, um die Handhabbarkeit nochmals zu verbessern, indem auf passende Länge vorperforierte Stücke Klebeband bequem abgelängt werden können.

Es lassen sich auf diese Weise Kanten zwischen den einzelnen Abschnitten erzielen, die sehr fusselfrei sind, also ein unerwünschtes Ausfransen vermieden wird.

Um ein besonders einfaches Arbeiten für den Anwender zu ermöglichen, sind die Perforationen rechtwinklig zur Laufrichtung des Klebebands ausgerichtet und/oder in regelmäßigen Abständen angeordnet.

Besonders vorteilhaft lassen sich die Perforationen diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrein zu erzielen, beispielsweise konkav oder konvex ausgeformte Schneidkanten.

Als Ausgangsmaterialien für das Trägermaterial für das Klebeband sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Trägers eingesetzt werden.

Des Weiteren sind Garne, gefertigt aus den angegebenen Fasern, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Die Kettfäden und/oder die Schussfäden können dabei jeweils nur aus synthetischen Fäden oder nur aus Fäden aus natürlichen Rohstoffen bestehen, also sortenrein sein.

Die Garne oder Fäden der Gewebe können als Filamente vorliegen. Im Sinne dieser Erfindung wird unter einem Filament ein Bündel paralleler, gerader Einzelfasern/Einzelfilamente verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen. Das Texturieren bezeichnet allgemein einen Vorgang, bei welchem die Fäden dauerhaft gekräuselt werden. Durch die Kräuselung werden Schlingen erzeugt, welche die elastische Dehnbarkeit und auch die Abriebbeständigkeit erhöhen.

Bevorzugt wird als Material für den Träger Polyamid, besonders bevorzugt Polyester aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Es eignet sich auch ein Trägermaterial für das Klebeband, das aus Papier, aus einem Laminat, aus einer Folie (zum Beispiel PP, PE, PET, PA, PU), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen. Mit Polyurethanen, Copolymeren aus Polyolefinen lassen sich beispielsweise flexible und elastische Träger erzeugen, mit Polyester und Polyamiden werden gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Bevorzugt ist ein Laminat aus dem textilen Träger und zumindest auf einer Seite des textilen Trägers aufgebrachten Folie oder Kunststoffschicht. Weiterhin können auf der Ober- und der Unterseite des textilen Trägers Folien beziehungsweise Kunststoffschichten aufgebracht sein.

Das Aufbringen kann durch Auflaminieren oder durch Extrusion erfolgen.

Bevorzugt ist eine Variante, der ein Vlies unterseitig mit einer Folie versehen ist, die auf der anderen Seite mit einer Haftklebemasse ausgerüstet ist.

Als Folien- beziehungsweise Kunststoffmaterial eignen sich Folien wie zum Beispiel PP, PE, Polyester, PA, PU oder PVC. Die Folien selbst können wiederum aus mehreren einzelnen Lagen besteht, beispielsweise aus zu Folie coextrudierten Lagen.

Bevorzugt werden Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLDPE) sein. Geeignet sind auch Polypropylene (zum Beispiel Polypropylen-Homopolymere, Polypropylen-Random-Copolymere oder Polypropylen-BlockCopolymere).

Die Folie weist vorzugsweise eine Dicke von 12 µm bis 100 µm, weiter vorzugsweise 28 bis 50 µm, insbesondere 35 µm auf.

Die Folie kann farbig und/oder transparent sein.

Der oder die Klebstoffstreifen dienen zur Fixierung des Klebebands während des Wickelvorgangs.

Der oder die Klebstoffstreifen können aus Streifen aus reiner Klebemasse bestehen. Sie können auch aus einem doppelseitig selbstklebenden Klebeband bestehen.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.

Vorzugsweise ist die auf dem Trägermaterial aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Eine Klebemasse, die sich als besonders geeignet zeigt, ist eine niedermolekulare Acrylatschmelzhaftklebemasse, wie sie unter der Bezeichnung acResin UV von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 2 520 627 A1, der EP 2 522 705 A1, der EP 2 520 628 A1, der EP 2 695 926 A1 und der EP 2 520 629 A1 beschrieben.

Besonders bevorzugt ist eine Haftklebemasse in Form einer getrockneten Polymerdispersion, wobei das Polymer aufgebaut ist aus:
(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmitteln zugesetzt werden. Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I, 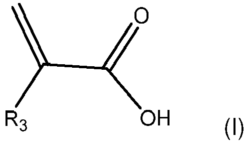 wobei R³ = H oder CH₃ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:
(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. EI-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind.

Für den Fachmann überraschend und nicht vorhersehbar führt das Fehlen von Klebharzen beim Klebeband nicht - wie der Fachmann erwartet hätte - zu einer unzureichenden Klebkraft. Darüber hinaus ist auch das Flaggingverhalten überraschenderweise nicht schlechter.

Insbesondere nicht zugesetzt werden der Haftklebemasse die folgenden Substanzen:
- Kohlenwasserstoffharze (zum Beispiel Polymere auf Basis ungesättigter C₅- oder C₉-Monomere)
- Terpenphenolharze
- Polyterpenharze auf Basis von Rohstoffen wie zum Beispiel α- oder β-Pinen
- aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Wegen der besonderen Eignung als Klebemasse für Klebebänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25°C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)-,acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinyl¬acetat, Vinylalkoholen und/oder Vinylethern eingesetzt.

Der Restlösungsmittel-Gehalt sollte unter 1 Gew.-% beitragen.

Eine Klebemasse, die sich als besonders geeignet zeigt, ist eine niedermolekulare Acrylatschmelzhaftklebemasse, wie sie unter der Bezeichnung acResin UV oder Acronal ^{®}, insbesondere acResin 258UV , von der BASF geführt wird. Diese Klebemasse mit niedrigem K-Wert erhält ihre anwendungsgerechten Eigenschaften durch eine abschließende strahlenchemisch ausgelöste Vernetzung.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Im Folgenden soll die Erfindung anhand mehrerer Figuren sowie eines Beispiels näher erläutert werden, ohne damit die Erfindung unnötig einschränken zu wollen.

Es zeigen
- Figur 1: ein erfindungsgemäß einsetzbares Klebeband mit einem Klebstoffstreifen,
- Figur 2: ein erfindungsgemäß einsetzbares Klebeband mit einem Klebstoffstreifen, der mit Versatz aufgebracht ist,
- Figur 3: ein drittes erfindungsgemäß einsetzbares Klebeband mit zwei Klebstoffstreifen,
- Figur 4: das mit dem Klebeband aus Figur 1 ummantelte Gut und
- Figur 5: ein viertes erfindungsgemäß einsetzbares Klebeband.

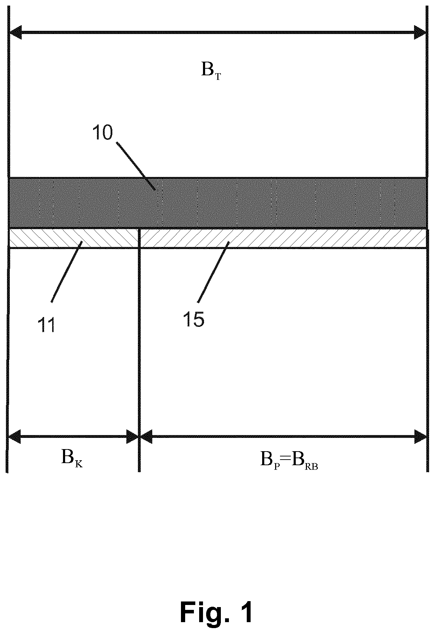

In der Figur 1 ist im Querschnitt ein erfindungsgemäß einsetzbares Klebeband mit einem Träger 10, der eine Breite B_{T} (beispielsweise 45 mm) aufweist. Auf der Unterseite des Trägers 10 ist ein Klebstoffstreifen 11 vorhanden mit einer Breite B_{K} von 10 mm und somit von ungefähren 22 % der Breite B_{T}.

Neben dem Klebstoffstreifen 11 auf der Unterseite des Trägers ist ein Polymerstreifen 15 vorhanden, der sich über eine Breite B_{P} von 100 % der nicht mit dem Klebstoffstreifen 11 beschichteten Restbreite B_{RB} des Trägers erstreckt, das heißt, es gilt B_{P} gleich B_{RB}.

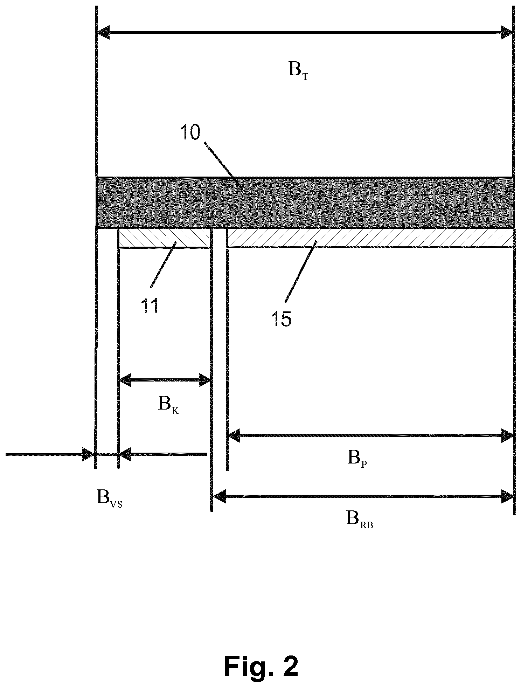

Im Gegensatz zu dem Klebeband aus der Figur 2, in der der Streifen mit einem Versatz mit einer Breite B_{VS} aufgebracht ist, schließt der Klebestreifen 11 bündig mit der Längskante des Trägers 10 ab.

Neben dem Klebstoffstreifen 11 auf der Unterseite des Trägers ist ein Polymerstreifen 15 vorhanden, der sich über eine Breite B_{P} von 95 % der nicht mit dem Klebstoffstreifen 11 beschichteten Restbreite B_{RB} des Trägers erstreckt, das heißt, es gilt B_{P} nicht gleich B_{RB}.

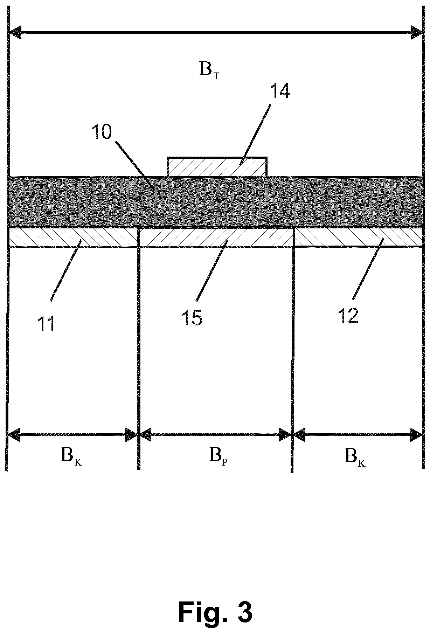

Die Figur 3 zeigt ein drittes erfindungsgemäß einsetzbares Klebeband mit zwei Klebstoffstreifen 11, 12. An der Unterseite des Trägers 10 sind ein erster Klebstoffstreifen 11 und ein zweiter Klebestoffstreifen 12 vorhanden. Die Klebstoffstreifen 11, 12 verlaufen in Längsrichtung des Trägers 10, auch Maschinenrichtung genannt und schließen beide bündig mit den Längskanten des Trägers 10 ab.

Zwischen den Klebstoffstreifen 11, 12 auf der Unterseite des Trägers ist ein Polymerstreifen 15 vorhanden, der sich über eine Breite B_{P} von 100 % der nicht mit den Klebstoffstreifen 11, 12 beschichteten Restbreite B_{RB} des Trägers erstreckt, das heißt, es gilt B_{P} gleich B_{RB}.

Auf der Oberseite des Trägers 10 ist ein dritter Klebstoffstreifen 14 vorgesehen. Der dritte Klebestreifen 14 ist im Querschnitt des Trägers 10 gesehen im Bereich des Polymerstreifens 15 zwischen den beiden Klebstoffstreifen 11, 12 auf der Unterseite des Trägers.

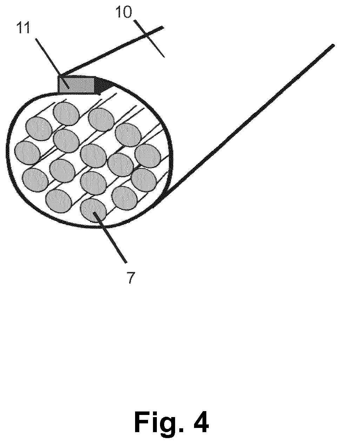

Figur 4 zeigt das mit dem Klebeband aus Figur 1 ummantelte Gut, hier Kabel 7 für einen Kabelbaum im Automobilbereich.

Die Umhüllung der Kabel 7 mit dem Klebeband erfolgt so, dass der Klebestreifen 11 auf dem klebestreifenfreien Ende des Trägers 10 liegt.

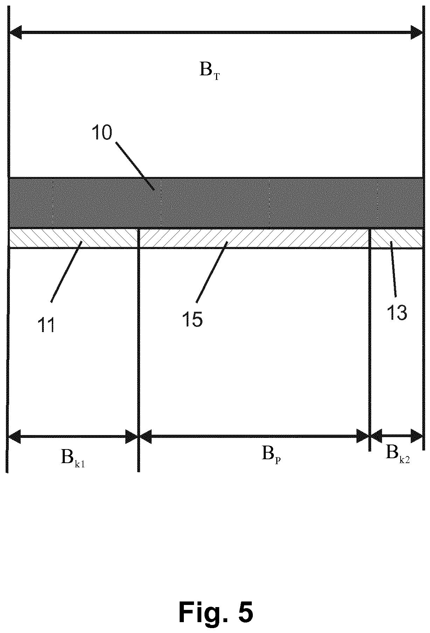

In der Figur 5 ist ein viertes erfindungsgemäß einsetzbares Klebeband mit zwei Klebstoffstreifen 11, 13 gezeigt. An der Unterseite des Trägers 10 sind ein erster Klebstoffstreifen 11 und ein zweiter Klebestoffstreifen 13 vorhanden, wobei der zweite Klebstoffstreifen 13 eine geringe Breite B_{K2} als der erste Klebstoffstreifen 11 mit einer Breite B_{K1} aufweist.

Die Klebstoffstreifen 11, 13 verlaufen in Längsrichtung des Trägers 10, auch Maschinenrichtung genannt und schließen beide bündig mit den Längskanten des Trägers 10 ab.

Zwischen den Klebstoffstreifen 11, 13 auf der Unterseite des Trägers ist ein Polymerstreifen 15 vorhanden, der sich über eine Breite B_{P} von 100 % der nicht mit den Klebstoffstreifen 11, 13 beschichteten Restbreite B_{RB} des Trägers erstreckt, das heißt, es gilt B_{P} gleich B_{RB}.

Bevor die Erfindung mittels Beispielen plastisch dargestellt wird, werden die verwendeten Messmethoden beschrieben.

### Prüfmethoden

Die Messungen werden - soweit nicht ausdrücklich anders erwähnt - bei einem Prüfklima von 23 ± 1 °C und 50 ± 5 % rel. Luftfeuchte durchgeführt.

### Schälfestigkeit (Klebkraft, KK)

Zur Messung der Klebkräfte wurden 19 mm breite Prüfstreifen blasenfrei auf eine fein geschliffene (Schmirgelpapier mit FEPA-Körnung 240) Stahlplatte aus rostfreiem Stahl geklebt und mit einer gummiumwickelten 2-kg-Rolle mit einer Geschwindigkeit von 10 m/min angedrückt. Die Stahlplatte und das überstehende Ende des Klebebandes wurden dann in der Weise in die Enden einer Zugprüfmaschine gespannt, dass ein Abzugswinkel von 180° entstand. Nach Abwarten einer vorgegebenen Aufziehzeit (wenn nichts anderes angegeben ist, 30 Minuten) wurde das Klebeband mit einer Geschwindigkeit von 300 mm/min von der Stahlplatte abgezogen. Die Angabe der Klebkraft erfolgt in N/cm.

### Statische Glasübergangstemperatur T_{g}

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1).

### Molekulargewichte

Das gewichtsmittlere Molekulargewicht M_{w} wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Ä, ID 8,0 mm x 50 mm verwendet. Zur Auftrennung werden die Säulen PSS-SDV, 5 µ, 10³ Ä sowie 10⁵ Å und 10⁶ Å mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 Å = 10⁻¹⁰ m).

### Abriebbeständigkeit

Die Abriebbeständigkeit wird nach LV312-1 ebenfalls anhand eines definierten Prüfverfahrens bestimmt. Die Klassifizierung der Klebebänder hinsichtlich ihrer Abriebbeständigkeit bei einem Dorndurchmesser von 5 mm ist in Tabelle 2 wiedergegeben: Hierzu wird das zu untersuchende Klebeband zunächst auf einen Dorn beziehungsweise Metallstab mit 5 mm Durchmesser aufgeklebt. Mit einem Schabwerkzeug, welches einen Nadeldurchmesser von 0,45 mm aufweist, wird dann unter Berücksichtigung einer Gewichtskraft von 7 N die Anzahl der Hübe bestimmt, die erforderlich ist, um das Klebeband durchzuscheuern.

Je größer die Anzahl der Hübe, desto abriebbeständiger ist das fragliche Klebeband ausgelegt.

**Tabelle 2: Klassifizierung Abriebbeständigkeit nach LV 312-1 (10/2009)**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 -14999 Hübe |
| F extrem hoher Abriebschutz | ≥ 15000 Hübe |

Die folgenden Beispiele sollen dazu dienen, die Erfindung zu veranschaulichen, ohne sie einzuschränken zu wollen.

### Beispiele

Insgesamt sind sechs unterschiedliche Klebebänder hergestellt worden. Beispiel 1 ist ein Klebeband ohne Polymerschicht, die Beispiele 2 bis 6 weisen jeweils eine Polymerschicht mit unterschiedlicher Polymerbasis auf.

Als Träger wurde jeweils ein 45 mm breites PET-Gewebe in Leinwandbindung mit 130 g/m² genommen, an dessen zwei Längskanten jeweils bündig ein Klebstoffstreifen von 10 mm Breite aufgebracht worden sind.

Zwischen die Klebstoffstreifen wurde ein Polymerstreifen mit einer Breite von 25 mm aufgebracht, und zwar ebenfalls mit 70 g/m² Masseauftrag.

| | |
|---|---|
| Träger : | 45 mm breites Gewebe PET, Leinwandbindung, 130 g/m² |
| Klebstoffstreifen: | bündig mit der Längskante des Trägers abschließend 10 mm Breite, 70 g/m² Masseauftrag Acrylatbasierter Kleber |
| Polymerstreifen: | bündig an die Klebstoffstreifen anschließend; 25 mm Breite, 70 g/m² Masseauftrag Polymerbasis unterschiedlich |

| # | Beschichtungstype | Name | Auftragsgewicht [g/m²] | Abriebfestigkeit [Anzahl Hübe] | Abriebklasse LV312 |
|---|---|---|---|---|---|
| 1 | - | - | - | 286 | B |
| 2 | Acryllatex | Acronal 500D | 70 | 812 | C |
| 3 | Naturkautschuk | SMR CV 50 | 70 | 490 | B |
| 4 | Naturkautschuklatex | Neotex FA | 70 | 348 | B |
| 5 | Synthesekautschuk | Kraton D1101 AS | 70 | 793 | C |
| 6 | EPDM | Vistalon 6602 | 70 | 669 | C |

Durch die unterschiedlichen Polymerstreifen wird die Abriebbeständigkeit im Vergleich zum nackten Träger signifikant erhöht.

Des Weiteren zeigen die Rollen mit Polymerstreifen aufgrund der über die gesamte Breite des Trägers vorhandene gleichmäßige Dicke ein besseres Wickelverhalten. Die gewickelten Rollen verfügen über deutlich saubere Kanten und zeigen kein Gapping, also keine Löcher oder Lücken innerhalb der Beschichtungen zwischen den Trägerlagen innerhalb der Klebebandrolle.

## Patentansprüche

1. Verwendung eines Klebebandes zum Ummanteln von langgestrecktem Gut wie Kabeln in einem Automobil, wobei das langgestreckte Gut in axialer Richtung von dem Klebeband umhüllt wird, wobei das Klebeband einen Träger mit einer Oberseite und einer Unterseite aufweist, wobei der Träger bezogen auf die Querrichtung eine Breite B_{T} aufweist,
wobei an zumindest einer Längskante auf der Unterseite des Trägers ein Klebstoffstreifen vorgesehen ist, der eine Breite B_{K} von mindestens 3 mm und von höchstens 30 % der Breite B_{T} aufweist,
**dadurch gekennzeichnet, dass**
neben dem Klebstoffstreifen auf der Unterseite des Trägers zumindest ein nichtklebender Polymerstreifen vorhanden ist, der sich über eine Breite B_{P} von mindestens 60 %, vorzugsweise 75 %, besonders vorzugsweise 90 %, ganz besonders vorzugsweise 100 % der nicht mit dem Klebstoffstreifen beschichteten Restbreite B_{RB} des Trägers erstreckt.

2. Verwendung eines Klebebandes nach Anspruch 1,
**dadurch gekennzeichnet, dass**
an beiden Längskanten auf der Unterseite des Trägers jeweils ein Klebstoffstreifen vorgesehen ist, die eine Breite B_{K} von mindestens 3 mm und von höchstens 30 % der Breite B_{T} aufweisen,
wobei zwischen den Klebstoffstreifen auf der Unterseite des Trägers zumindest ein Polymerstreifen vorhanden ist, der sich über eine Breite B_{P} von mindestens 60 %, vorzugsweise 75 %, besonders vorzugsweise 90 %, ganz besonders vorzugsweise 100 % der nicht mit den Klebstoffstreifen beschichteten Restbreite B_{RB} des Trägers erstreckt.

3. Verwendung eines Klebebandes nach Anspruch 1 oder 2,
**dadurch gekennzeichnet, dass**
der oder die Klebestoffstreifen jeweils bündig mit der oder den Längskanten des Trägers abschließen.

4. Verwendung eines Klebebandes nach zumindest einem der Ansprüche 1 bis 3,
**dadurch gekennzeichnet, dass**
die Breite B_{K} der Klebstoffstreifen mindestens 10 mm, vorzugsweise mindestens 15 mm und/oder maximal höchstens 25 % der Breite B_{T}, vorzugsweise höchstens 10 % der Breite B_{T} beträgt.

5. Verwendung eines Klebebandes nach zumindest einem der vorherigen Ansprüche,
**dadurch gekennzeichnet, dass**
die Breite B_{K} der Klebstoffstreifen zwischen 5 und 40 mm, vorzugsweise zwischen 10 und 30 mm beträgt.

6. Verwendung eines Klebebandes nach zumindest einem der Ansprüche 2 bis 5,
**dadurch gekennzeichnet, dass**
die Breite des einen Klebstoffstreifens B_{K1} um den Faktor 0,5 bis 0,8, vorzugsweise 0,6 bis 0,75 kleiner ist als die Breite des anderen Klebstoffstreifens B_{K2}.

7. Verwendung eines Klebebandes nach zumindest einem der vorherigen Ansprüche,
**dadurch gekennzeichnet, dass**
der oder die Klebstoffstreifen eine Dicke von 40 bis 300 µm, vorzugsweise 60 bis 200 µm, weiter vorzugsweise 60 bis 140 µm aufweisen.

8. Verwendung eines Klebebandes nach zumindest einem der vorherigen Ansprüche,
**dadurch gekennzeichnet, dass**
die Dicke oder das Auftragsgewicht des einen, insbesondere des schmaleren Klebstoffstreifens um den Faktor 0,5 bis 0,8, vorzugsweise 0,6 bis 0,75 kleiner ist als die Dicke oder das Auftragsgewicht des anderen Klebstoffstreifens.

9. Verwendung eines Klebebandes nach zumindest einem der vorherigen Ansprüche,
**dadurch gekennzeichnet, dass**
die Breite B_{T} des Trägers zwischen 20 und 200 mm, vorzugsweise zwischen 40 bis 130 mm beträgt.

10. Verwendung eines Klebebandes nach zumindest einem der vorherigen Ansprüche,
**dadurch gekennzeichnet, dass**
der Träger ein Flächengewicht von 30 bis 250 g/m², vorzugsweise 50 bis 200 g/m², weiter vorzugsweise 60 bis 150 g/m² aufweist.

11. Verwendung eines Klebebandes nach zumindest einem der vorherigen Ansprüche,
**dadurch gekennzeichnet, dass**
als Träger ein Gewebe, ein Vlies oder ein Gewirke eingesetzt wird.

12. Langgestrecktes Gut, wie insbesondere ein Kabelsatz, ummantelt mit einem Klebeband nach zumindest einem der vorherigen Ansprüche.

## Claims

1. Use of an adhesive tape for wrapping elongate material such as cables in a motor vehicle, the elongate material being enveloped in an axial direction by the adhesive tape, the adhesive tape comprising a carrier having a top side and a bottom side, the carrier, based on the cross direction, having a width B_{T},
there being provided, on at least one long edge on the bottom side of the carrier, a strip of adhesive which has a width B_{K} of at least 3 mm and at most 300 of the width B_{T}, **characterized in that** as well as the strip of adhesive on the bottom side of the carrier, there is at least one non-tacky polymer strip which extends over a width B_{P} of at least 60%, preferably 75%, more preferably 90%, very preferably 100%, of the residual width B_{RB} - not coated with the strip of adhesive - of the carrier.

2. Use of an adhesive tape according to Claim 1,
**characterized in that** there is provided, on each of both long edges on the bottom side of the carrier, a strip of adhesive, said strips having a width B_{K} of at least 3 mm and of at most 300 of the width B_{T},
there being present, between the strips of adhesive on the bottom side of the carrier, at least one polymer strip which extends over a width B_{P} of at least 60%, preferably 75%, more preferably 90%, very preferably 100%, of the residual width B_{RB} - not coated with the strip of adhesive - of the carrier.

3. Use of an adhesive tape according to Claim 1 or 2,
**characterized in that** the strip or strips of adhesive each finish flush with the long edge or long edges of the carrier.

4. Use of an adhesive tape according to at least one of Claims 1 to 3,
**characterized in that**
the width B_{K} of the strips of adhesive is at least 10 mm, preferably at least 15 mm and/or at maximum at most 250 of the width B_{T}, preferably at most 10% of the width B_{T}.

5. Use of an adhesive tape according to at least one of the preceding claims,
**characterized in that** the width B_{K} of the strips of adhesive is between 5 and 40 mm, preferably between 10 and 30 mm.

6. Use of an adhesive tape according to at least one of Claims 2 to 5,
**characterized in that**
the width of one strip of adhesive B_{K1} is smaller by a factor of 0.5 to 0.8, preferably 0.6 to 0.75, than the width of the other strip of adhesive B_{K2}.

7. Use of an adhesive tape according to at least one of the preceding claims,
**characterized in that** the strip or strips of adhesive have a thickness of 40 to 300 um, preferably 60 to 200 um, more preferably 60 to 140 um.

8. Use of an adhesive tape according to at least one of the preceding claims,
**characterized in that**
the thickness or the coat weight of one, more particularly the narrower, strip of adhesive is smaller by a factor of 0.5 to 0.8, preferably 0.6 to 0.75, than the thickness or the coat weight of the other strip of adhesive.

9. Use of an adhesive tape according to at least one of the preceding claims,
**characterized in that** the width B_{T} of the carrier is between 20 and 200 mm, preferably between 40 to 130 mm.

10. Use of an adhesive tape according to at least one of the preceding claims,
**characterized in that**
the carrier has a basis weight of 30 to 250 g/m², preferably 50 to 200 g/m², more preferably 60 to 150 g/m².

11. Use of an adhesive tape according to at least one of the preceding claims,
**characterized in that** the carrier used comprises a woven, nonwoven or knitted fabric.

12. Elongate material, such as in particular a cable harness, wrapped with an adhesive tape according to at least one of the preceding claims.

## Revendications

1. Utilisation d'une bande adhésive pour envelopper un produit allongé tel que des câbles dans une automobile, le produit allongé étant enveloppé par la bande adhésive dans la direction axiale, la bande adhésive présentant un support pourvu d'une face supérieure et d'une face inférieure, le support présentant une largeur B_{T} par rapport à la direction transversale,
un ruban adhésif étant prévu au niveau d'au moins un bord longitudinal sur la face inférieure du support, lequel ruban adhésif présente une largeur B_{K} d'au moins 3 mm et d'au plus 30 % de la largeur B_{T},
**caractérisée en ce**
**qu'**au moins un ruban polymère non adhésif est présent en plus du ruban adhésif sur la face inférieure du support, lequel ruban polymère s'étend sur une largeur B_{P} d'au moins 60 %, de préférence de 75 %, plus préférentiellement de 90 %, mieux encore de 100 % de la largeur résiduelle B_{RB}, non revêtue du ruban adhésif, du support.

2. Utilisation d'une bande adhésive selon la revendication 1,
**caractérisée en ce**
**qu'**un ruban adhésif est prévu au niveau des deux bords longitudinaux sur la face inférieure du support, lequel ruban adhésif présente une largeur B_{K} d'au moins 3 mm et d'au plus 30 % de la largeur B_{T},
au moins un ruban polymère étant présent entre les rubans adhésifs sur la face inférieure du support, lequel ruban polymère s'étend sur une largeur B_{P} d'au moins 60 %, de préférence de 75 %, plus préférentiellement de 90 %, mieux encore de 100 % de la largeur résiduelle B_{RB}, non revêtue du ruban adhésif, du support.

3. Utilisation d'une bande adhésive selon la revendication 1 ou 2,
**caractérisée en ce que**
le ou les rubans adhésifs se termine(nt) respectivement en affleurement avec le ou les bords longitudinaux du support.

4. Utilisation d'une bande adhésive selon au moins l'une des revendications 1 à 3,
**caractérisée en ce que**
la largeur B_{K} du ruban adhésif vaut au moins 10 mm, de préférence au moins 15 mm et/ou au maximum au plus 25 % de la largeur B_{T}, de préférence au plus 10 % de la largeur B_{T}.

5. Utilisation d'une bande adhésive selon au moins l'une des revendications précédentes,
**caractérisée en ce que**
la largeur B_{K} du ruban adhésif vaut entre 5 et 40 mm, de préférence entre 10 et 30 mm.

6. Utilisation d'une bande adhésive selon au moins l'une des revendications 2 à 5,
**caractérisée en ce que**
la largeur de l'un des rubans adhésifs B_{K1} est inférieure, d'un facteur de 0,5 à 0,8, de préférence de 0,6 à 0,75, à la largeur de l'autre ruban adhésif B_{K2}.

7. Utilisation d'une bande adhésive selon au moins l'une des revendications précédentes,
**caractérisée en ce que**
le ou les rubans adhésifs présente(nt) une épaisseur de 40 à 300 um, de préférence de 60 à 200 um, plus préférentiellement de 60 à 140 um.

8. Utilisation d'une bande adhésive selon au moins l'une des revendications précédentes,
**caractérisée en ce que**
l'épaisseur ou le poids d'application de l'un des rubans adhésifs, en particulier du ruban adhésif plus étroit, est inférieur(e) du facteur de 0,5 à 0,8, de préférence de 0,6 à 0,75, à l'épaisseur ou au poids d'application de l'autre ruban adhésif.

9. Utilisation d'une bande adhésive selon au moins l'une des revendications précédentes,
**caractérisée en ce que**
la largeur B_{T} du support vaut entre 20 et 200 mm, de préférence entre 40 et 130 mm.

10. Utilisation d'une bande adhésive selon au moins l'une des revendications précédentes,
**caractérisée en ce que**
le support présente un poids surfacique de 30 à 250 g/m², de préférence de 50 à 200 g/m², plus préférentiellement de 60 à 150 g/m².

11. Utilisation d'une bande adhésive selon au moins l'une des revendications précédentes,
**caractérisée en ce**
**qu'**un tissu, un non-tissé ou un tissu à mailles est utilisé comme support.

12. Produit allongé, tel qu'un faisceau de câbles en particulier, enveloppé d'une bande adhésive selon au moins l'une des revendications précédentes.
